(19) Europäisches Patentamt
European Patent Office
Office européen des brevets

(11) **EP 1 460 812 A1**

(12) **DEMANDE DE BREVET EUROPEEN**

(43) Date de publication:
**22.09.2004 Bulletin 2004/39**

(51) Int Cl.7: **H04L 12/56**

(21) Numéro de dépôt: **04290161.1**

(22) Date de dépôt: **21.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL HR LT LV MK**

(30) Priorité: **21.03.2003 FR 0303467**

(71) Demandeur: **ALCATEL**
**75008 Paris (FR)**

(72) Inventeurs:
• **Dauchy, Philippe**
**75014 Paris (FR)**
• **Conte, Alberto**
**75014 Paris (FR)**

(74) Mandataire: **Chaffraix, Sylvain et al**
**Compagnie Financière Alcatel**
**Département de Propriété Industrielle,**
**5, rue Noel Pons**
**92734 Nanterre Cedex (FR)**

(54) **Transmission de paquets en fonction de leur temps total de traitement**

(57) Procédé pour transmettre un paquet au sein d'un réseau de télécommunication (N), caractérisé en ce qu'un temps total de traitement est associé audit paquet et modifié par au moins certains des équipements de réseau ($R_1$, $R_2$, $R_3$, $R_4$, $R_5$) en fonction d'un temps particulier de traitement, et en ce que lesdits équipements de réseau traitent ledit paquet, en fonction dudit temps total de traitement associé.

FIG_1

## Description

La présente invention est relative à la transmission de paquets au sein d'un réseau de données, notamment de télécommunication. Elle s'applique particulièrement bien dans le cas où les paquets transmettent des flux de données nécessitant une certaine qualité de service (QoS, pour *Quality of Service,* en anglais).

Il est connu d'affecter aux paquets transportant des flux associés à une qualité de service, une valeur d'identificateur, représentative de cette qualité de service. Ce mécanisme est par exemple celui décrit dans le RFC 2475 intitulé « *An Architecture for Differentiated Services »,* et est communément appelé « DiffServ ».

Selon cette solution de l'état de l'art, les équipements de réseau traitent les paquets selon des priorités associées à chaque valeur d'identificateur (ou « couleur »). Il est ainsi possible d'affecter une priorité plus importante à des flux nécessitant une qualité de service élevée, et une priorité moins importante aux flux nécessitant une qualité de service moindre.

Cette solution de l'état de l'art souffre toutefois de plusieurs inconvénients. Elle est notamment insuffisante pour arbitrer les problèmes posés par des flux de données de priorité identique, c'est-à-dire transportant des flux associés à une même classe de service.

En effet, pour deux paquets ayant des priorités identiques, le délai de transmission peut différer de façon substantielle, en fonction du chemin suivi, c'est-à-dire de la longueur de ce chemin (en nombre d'équipements traversés) et de l'encombrement de ce chemin. Autrement dit, la qualité de service réellement fournie peut varier fortement, entre deux flux de données ayant demandés la même qualité de service.

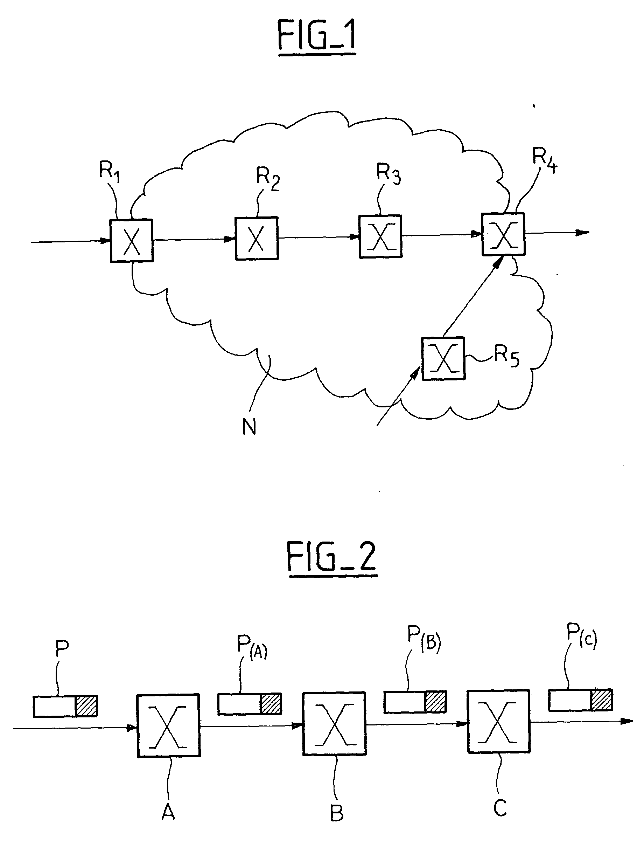

La figure 1 illustre une telle situation.

Un réseau N est composé de 5 équipements de réseau $R_1$, $R_2$... $R_5$. Deux flux de données sont indiqués sur la figure : le premier entre par $R_1$ et ressort par $R_4$. Le second entre par $R_5$ et ressort par $R_6$. Ces deux flux de données ont des priorités identiques.

Dans chaque équipement de réseau, les paquets subissent un traitement classique, consistant typiquement à lire et analyser une partie de ce paquet (son entête), puis à l'insérer dans une file d'attente de sortie, avant de le transmettre vers l'équipement de réseau suivant. En fonction du nombre de paquets transitant par un équipement, la longueur de cette file d'attente peut être plus ou moins importante, et donc le temps passé par un paquet dans cette file peut aussi être plus long.

Par la suite, pour la clarté de l'exposé, on supposera que la charge d'un équipement de réseau est directement fonction de la longueur de sa ou ses files d'attente. C'est-à-dire que l'on négligera l'impact des autres délais impliqués par le traitement dans cet équipement. Cet impact n'influera en effet nullement l'exposé des problèmes de l'état de la technique, ni la validité de la solution de l'invention.

Dans l'exemple de la figure 1, on suppose pour la clarté de l'exposé, que la charge des différents équipements de réseau est sensiblement identique. Auquel cas, on comprend aisément que les paquets suivant le chemin $R_1$, $R_2$, $R_3$, $R_4$ subissent un délai plus long que ceux suivant le chemin $R_5$, $R_4$, puisqu'il traverse un plus grand nombre d'équipements.

Comme ces deux flux de données ont des priorités identiques, l'équipement de réseau $R_4$ les traitera indifféremment. Généralement, le choix entre la transmission en dehors du réseau N, d'un paquet venant de $R_5$ ou de R, sera effectué de façon aléatoire.

Par conséquent, en sortie de l'équipement $R_5$, les deux flux de données auront subi des délais de transmission très différents, et les flux transportés auront des qualités de service réelles, différentes.

Des solutions ont été apportées pour tenter de résoudre ce problème.

Par exemple, la demande de brevet EP1193921 de la société Harris Corp. consiste à faire dépendre le traitement des paquets dans un équipement de réseau d'un champ TTL (Time To Live) dont la valeur est fixée par l'émetteur originel du paquet et décru d'une unité par chaque équipement de réseau. Toutefois cette solution souffre du fait que le champ TTL mesure une distance en nombre d'équipements traversés et non un temps de transmission : ainsi, il ne peut être tenu compte du fait qu'un équipement de réseau, particulièrement chargé, ralentit la transmission des paquets passant par lui. Elle ne permet donc pas de résoudre le problème.

La demande de brevet EP0693839 de la société Toshiba consiste à associer aux paquets une date limite de transmission et à calculer, au niveau de chaque équipement de réseau traversé, si le paquet peut ou non arriver à sa destination avant cette date limite. Cette solution n'est pas non plus satisfaisante, car si elle permet de déterminer un problème (le paquet n'arrivera pas à la date prévue), elle ne peut éviter ce problème, ni l'anticiper.

Le but de l'invention est de pallier les déficiences des solutions jusqu'alors proposée. Pour ce faire, l'invention consiste à faire dépendre l'ordonnancement des paquets à transmettre dans un équipement de réseau, du retard déjà subit par les paquets le long du chemin.

Pour ce faire, l'invention a pour objet un procédé pour transmettre un paquet au sein d'un réseau de télécommunication. Il se caractérise en ce qu'un temps total de traitement est associé au paquet et est modifié par au moins certains des équipements de réseau en fonction d'un temps particulier de traitement. Les équipements de réseau traitent le paquet, en fonction du temps total de traitement associé.

Selon un mode de réalisation le temps total de traitement est contenu dans un champ du paquet.

Selon un mode de réalisation, le temps particulier de traitement est déterminé, par l'équipement de réseau, comme une fonction de la taille de la ou des files d'attente de l'équipement de réseau.

Ce temps total de traitement est par exemple initialisé, préférentiellement par l'émetteur dudit paquet, à une durée maximale de transmission, et le temps particulier de traitement est retranché à ce temps total de traitement.

L'invention a aussi pour objet un équipement d'un réseau de données, notamment de télécommunication, possédant des moyens pour recevoir des paquets entrants et des moyens pour transmettre des paquets sortants. Cet équipement, par exemple un routeur IP, est caractérise en ce qu'il dispose de surcroît

- d'un moyen d'évaluation du temps élémentaire de traitement des paquets entrants,
- de moyens pour modifier une valeur représentative du temps total de traitement, contenue dans le paquet entrant, en fonction du temps élémentaire de traitement, et
- des moyens pour choisir les paquets sortants selon une priorité dépendante du temps total de traitement.

Selon un mode de réalisation, le temps total de traitement est contenu dans un champ dudit paquet.

Selon un mode de réalisation de l'invention, le temps particulier de traitement est déterminé, par l'équipement de réseau, comme une fonction de la taille de la ou des files d'attente de cet équipement de réseau.

Le temps total de traitement est par exemple initialisé, préférentiellement par l'émetteur du paquet, à une durée maximale de transmission, et le temps particulier de traitement est retranché à ce temps total de traitement.

De cette façon, les paquets ayant déjà subit le plus de retard sont privilégiés par le ou les équipements suivants. Ainsi, le délai total de transmission des paquets tend à s'harmoniser, et les qualités de service réellement offertes par le réseau tendent à être sensiblement identiques, si les qualités de service demandées sont elles-mêmes identiques.

L'invention et ses avantages apparaîtront de façon plus claire dans la description de mises en oeuvre qui va suivre, en liaison avec les figures annexées.

La figure 1, précédemment commentée, illustre un réseau de données et les problèmes de la solution de l'état de la technique.

La figure 2 schématise le parcours d'un paquet le long d'un chemin composé de plusieurs équipements de réseau.

La figure 3 illustre l'architecture fonctionnelle interne d'un équipement de réseau de type routeur.

La figure 4 illustre un exemple d'utilisation de l'invention sur le réseau de la figure 1.

Selon une mise en oeuvre de l'invention, les paquets contiennent un temps total de traitement. Ce temps total de traitement peut notamment être inséré dans un des champs de l'entête IP *(Internet Protocol)* des paquets.

Selon un mode de réalisation préférentiel, la valeur du temps total de traitement est initialisée à une durée maximale de transmission, par l'émetteur du paquet. Cet émetteur peut notamment être une entité de niveau application, qui connaissant le contenu sémantique des paquets, peut être à même de déterminer la durée maximale de transmission, c'est-à-dire la durée maximale souhaitée pour la transmission du paquet de bout en bout (c'est-à-dire depuis l'émetteur jusqu'au(x) destinataire(s).)

Certains au moins des équipements de réseau traversés par le paquet déduisent de ce temps total de traitement, son temps particulier de traitement. Lorsque le temps total de traitement atteint un certain seuil, par exemple 0, une action peut être déclenchée par l'équipement de réseau.

Notamment, le paquet peut être supprimé. En effet, par exemple si le paquet appartient à un flux vidéo pour un service de vidéo à la demande, le caractère « temps réel » est primordial afin d'obtenir un bon rendu sur le terminal destinataire. Aussi, un paquet trop retardé lors de sa transmission perd son caractère pertinent, et il peut être plus intéressant de perdre ce paquet (et donc potentiellement, un peu de qualité de l'image vidéo) que prendre en compte un paquet trop retardé.

Alternativement, le paquet peut se voir « surclasser », c'est-à-dire se voir affecter une priorité plus importante afin de « rattraper son retard ».

Ce mécanisme de forcer la perte de paquet lorsque le temps total de traitement devient inférieur à un seuil est similaire à celui mis en oeuvre pour le champ TTL *(Time To Live)* spécifié par le protocole IP. Ce champ TTL est toutefois insuffisant à résoudre la problématique de l'invention puisqu'il ne mesure qu'un nombre d'équipements traversés et ne tient pas compte du temps particulier de traitement dans chaque équipement. Or, en fonction de la charge de ces équipements, les temps particuliers de traitement peuvent être très différents.

La figure 2 montre un chemin composé de 3 équipements de réseau, A, B et C. Un paquet P suit ce chemin. Il comporte un champ contenant le temps total de traitement associé à ce paquet.

Lorsque l'équipement de réseau A reçoit le paquet P, il évalue son temps particulier de traitement, c'est-à-dire le temps que lui-même va mettre pour traiter le paquet. Ce temps est fonction de sa charge, éventuellement de sa capacité de traitement (vitesse du microprocesseur, longueur des files d'attente...) etc.

Il modifie le champ du paquet P contenant le temps total de traitement en fonction de l'évaluation de ce temps particulier de traitement.

Le paquet modifié $P_{(A)}$ est ensuite transmis vers l'équipement de réseau B, qui de la même façon, modifie le paquet $P_{(A)}$ en un paquet $P_{(B)}$ en fonction de son propre temps particulier de traitement.

Ce paquet $P_{(B)}$ est finalement transmis à l'équipement de réseau C qui à son tour le modifie en fonction de son temps particulier de traitement et le transmet sous la forme d'un paquet une nouvelle fois modifié $P_{(c)}$.

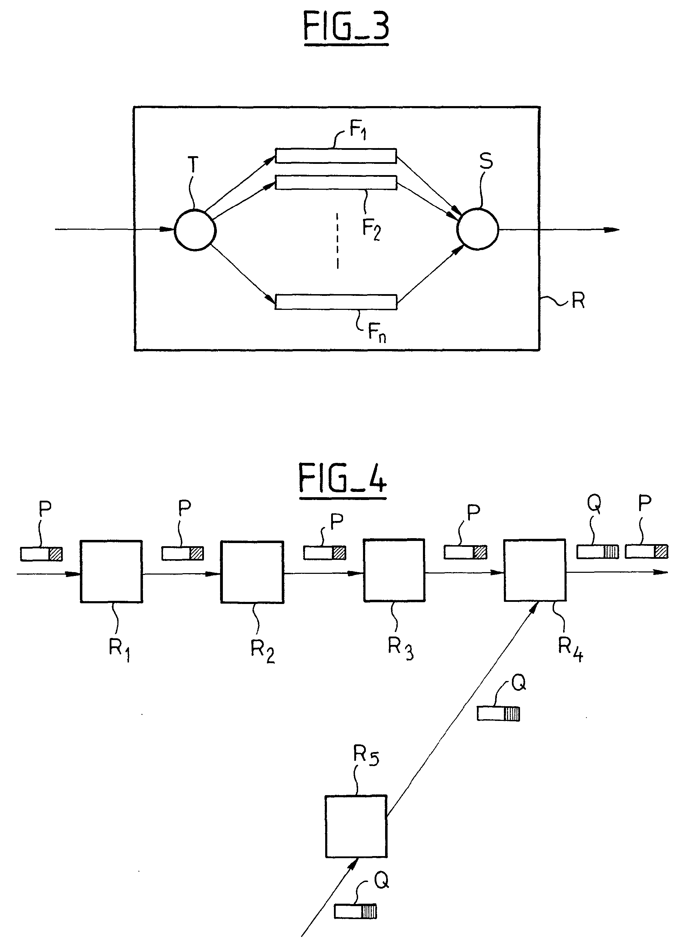

La figure 3 montre schématiquement l'architecture fonctionnelle interne d'un routeur IP, référencé R. Ce routeur est composé d'un processus de traitement T, d'un ensemble de files d'attente $F_1$, $F_2$... $F_n$ (l'ensemble pouvant éventuellement être réduit à un singleton) et d'un ordonnanceur S.

Les paquets entrants arrivent au processus de traitement T qui lit au moins une partie de leur contenu, typiquement l'entête IP, et en fonction de ce contenu, il choisit, entre autres choses, d'affecter le paquet entrant à une des files d'attente $F_1$, $F_2$... $F_n$. Ce choix peut par exemple être effectué en fonction d'une indication de priorité ou d'une « couleur DiffServ ».

Selon l'invention, le processus de traitement T est en outre chargé de déterminer le temps particulier de traitement et de modifier le temps total de traitement associé à ce paquet en fonction de ce temps particulier de traitement.

Selon un mode de réalisation de l'invention le temps particulier est contenu dans un des champs du paquet, notamment de l'entête IP. Il peut par exemple s'agit du champ « IP options », dans le cas d'une mise en oeuvre sous IPv4.

Le processus de traitement T lit donc la valeur du temps total de traitement du paquet entrant.

Il détermine, par ailleurs, le temps particulier de traitement, c'est-à-dire une estimation du temps qu'il sera nécessaire pour cet équipement de réseau R pour traiter ce paquet.

Ce temps particulier de traitement peut être fonction de la charge de l'équipement de réseau et notamment, selon une mise en oeuvre de l'invention, de la longueur de ces files d'attente.

Plus précisément, le processus de traitement T peut déterminer la longueur de la file d'attente F, dans laquelle il va insérer le paquet entrant. En fonction de la longueur et du temps moyen de traitement d'un paquet, il peut déterminer facilement le temps que le paquet va passer dans cette file d'attente. Compte tenu du fait que le temps de traitement par le processus de traitement T et par l'ordonnanceur S peut être considéré comme négligeable par rapport à ce temps passé dans la file d'attente, il est pertinent de considérer que le temps particulier est uniquement fonction du temps passé dans les files d'attente.

Selon cette mise en oeuvre, on peut donc écrire que le temps particulier de traitement t(R) de l'équipement de réseau R est donné par l'équation :

$$t(R) = \overline{t_R} \times L_{R,i}$$

dans laquelle $\overline{t_R}$ est le temps moyen de traitement d'un paquet par l'équipement de réseau R, et $L_{R,i}$ est la longueur, en nombre de paquets, de la file d'attente numéro i de l'équipement de réseau R.

Le processus de traitement T peut alors modifier le temps total de traitement en fonction de ce temps particulier de traitement t(R). Comme il a décrit précédemment, plusieurs mises en oeuvre sont possibles pour cela.

Le paquet ainsi modifié est alors effectivement inséré dans une des files d'attente $F_1$, $F_2$... $F_n$.

Selon un mode de réalisation de l'invention, l'insertion dans une des files d'attente peut être faite en fonction du temps total de traitement.

Selon un premier exemple, les files d'attente sont associées à des intervalles de temps correspondants à des temps totaux de traitement. Ainsi, par exemple, la file d'attente $F_1$ correspond à temps total de traitement dans l'intervalle [0 ; 10 ms], la file d'attente $F_2$ à un temps total de traitement dans l'intervalle [11 ms ; 20 ms] et ainsi de suite.

Selon un second exemple, les files d'attente sont associées, de façon classique en soit, à des priorités. Chaque paquet arrivant possède de même une priorité. En fonction de la valeur du temps total de traitement du paquet arrivant, celui-ci peut être classé dans une file d'attente différente de celle associée à sa priorité : ainsi, si un paquet possède une priorité 2 mais ayant un temps total de traitement trop important, il peut être rangé dans la file F, associé à la priorité 1 .

L'ordonnanceur a pour rôle de choisir parmi les files d'attente, un paquet à transmettre sur le ou les ports de sortie. Ce choix peut être fait en fonction d'un ordre donné à cet ensemble de files d'attente. Par exemple, il peut choisir prioritairement les paquets de la file d'attente $F_1$ puis de la file d'attente $F_2$, puis de la file d'attente $F_3$ et ainsi de suite.

La figure 3 illustre la mise en oeuvre de l'invention sur le réseau de la figure 1. Comme dans l'exemple de la figure 1, on a représenté deux flux de données, l'un entrant dans le réseau par l'équipement de réseau $R_1$, l'autre par l'équipement de réseau $R_5$, les deux sortants par l'équipement de réseau $R_4$. Pour chacun de ces flux, on considère un paquet, respectivement P et Q.

Le temps total de traitement de ces deux paquets est modifié le long de leur chemin respectif par les équipements de réseau traversé (toutefois, par soucis de lisibilité, on a conservé la même référence, P ou Q, tout le long du chemin).

Si l'on conserve la supposition qui avait été faite que chaque équipement de réseau possède une charge similaire, c'est-à-dire que les files d'attente des équipements de réseau sont à peu près uniformément remplies, le temps total de traitement devient fonction du nombre d'équipements traversés.

Par conséquent, l'équipement de réseau $R_5$ peut déterminer facilement que le paquet P a subit un retard plus important que le paquet Q. Il peut donc choisir le paquet P en priorité, par rapport au paquet Q, et donc contribuer à réduire ce retard.

Lorsque ce même processus est répété sur un grand nombre d'équipement de réseau, on peut arriver à une optimisation des temps totaux de traitement. Dans le cas où une durée maximale de transmission a été fixée, cette optimisation se fait naturellement par rapport à celle-ci.

Selon un mode de réalisation, la valeur du temps total de traitement est initialement fixée à 0, puis incrémentée, par les équipements de réseau traversé, de la valeur de leurs temps particuliers de traitement.

La valeur du temps total de traitement va donc croissant. Les équipements de réseau peuvent comparer cette valeur à un seuil et, en fonction du résultat de cette comparaison, déclencher des mécanismes similaires à ceux qui ont été décrit dans le cadre du mode de réalisation préférentiel.

Préférentiellement, chaque équipement de réseau est apte à modifier le temps total de traitement, et à déclencher le ou les mécanismes adéquats. Toutefois, l'invention peut aussi fonctionner lorsque seulement une partie des équipements de réseau dispose des fonctionnalités décrites. L'invention fonctionnera alors en « mode dégradé », mais permettra tout de même une amélioration substantielle par rapport au fonctionnement « classique » selon l'état de la technique.

**Revendications**

**1.** Procédé pour transmettre un paquet au sein d'un réseau de télécommunication, **caractérisé en ce qu'**un temps total de traitement est associé audit paquet et modifié par au moins certains des équipements de réseau en fonction d'un temps particulier de traitement, et **en ce que** lesdits équipements de réseau traitent ledit paquet, en fonction dudit temps total de traitement associé.

**2.** Procédé selon la revendication précédente, dans lequel ledit temps total de traitement est contenu dans un champ dudit paquet.

**3.** Procédé selon l'une des revendications 1 ou 2, dans lequel ledit temps particulier de traitement est déterminé, par ledit équipement de réseau, comme une fonction de la taille de la ou des files d'attente dudit équipement de réseau.

**4.** Procédé selon l'une des revendications précédentes, dans lequel ledit temps total de traitement est initialisé, préférentiellement par l'émetteur dudit paquet, à une durée maximale de transmission, et ledit temps particulier de traitement est retranché à ce temps total de traitement.

**5.** Équipement d'un réseau de données, notamment de télécommunication, possédant des moyens pour recevoir des paquets entrants et des moyens pour transmettre des paquets sortants, **caractérisé en**

**ce qu'**il dispose de surcroît d'un moyen d'évaluation du temps élémentaire de traitement des paquets entrants, de moyens pour modifier une valeur représentative du temps total de traitement, contenue dans ledit paquet entrant, en fonction dudit temps élémentaire de traitement, et des moyens pour choisir les paquets sortants selon une priorité dépendante dudit temps total de traitement.

**6.** Équipement selon la revendication précédente, dans lequel ledit temps total de traitement est contenu dans un champ dudit paquet.

**7.** Équipement selon l'une des revendications 5 ou 6, dans lequel ledit temps particulier de traitement est déterminé, par ledit équipement de réseau, comme une fonction de la taille de la ou des files d'attente dudit équipement de réseau.

**8.** Équipement selon l'une des revendications 5 à 7, dans lequel ledit temps total de traitement est initialisé, préférentiellement par l'émetteur dudit paquet, à une durée maximale de transmission, et ledit temps particulier de traitement est retranché à ce temps total de traitement.

## FIG_1

$R_1$  $R_2$  $R_3$  $R_4$

$R_5$

N

## FIG_2

P  P(A)  P(B)  P(c)

A  B  C

## FIG_3

## FIG_4

Office européen
des brevets

**RAPPORT DE RECHERCHE EUROPEENNE**

Numéro de la demande

EP 04 29 0161

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int.Cl.7) |
| X | EP 0 693 839 A (TOKYO SHIBAURA ELECTRIC CO) 24 janvier 1996 (1996-01-24) * abrégé * * colonne 1, ligne 3 - ligne 4 * * colonne 3, ligne 11 - ligne 28 * * colonne 4, ligne 27 - ligne 52 * * colonne 6, ligne 12 - ligne 17 * * colonne 6, ligne 56 - colonne 8, ligne 51 * * colonne 10, ligne 2 - ligne 30 * * colonne 11, ligne 36 - ligne 45 * * colonne 12, ligne 11 - ligne 14 * * colonne 12, ligne 31 - ligne 40 * * colonne 12, ligne 51 - colonne 13, ligne 22 * * colonne 12, ligne 45 - ligne 58 * * figures 1-4,7,8 * ----- | 1-8 | H04L12/56 |
| X | EP 1 193 921 A (HARRIS CORP) 3 avril 2002 (2002-04-03) * colonne 3, ligne 54 - ligne 58 * * colonne 7, ligne 52 - colonne 8, ligne 10 * * colonne 9, ligne 2 - ligne 5 * * colonne 9, ligne 45 - ligne 56 * * colonne 14, ligne 20 - ligne 22 * * colonne 14, ligne 40 - ligne 43 * * figure 4 * ----- | 1-8 | DOMAINES TECHNIQUES RECHERCHES (Int.Cl.7) H04L H04Q |
| A | EP 0 544 454 A (CRAY COMMUNICATIONS LTD) 2 juin 1993 (1993-06-02) * abrégé * * colonne 1, ligne 3 - ligne 20 * * colonne 2, ligne 45 - ligne 49 * * colonne 3, ligne 11 - ligne 15 * * colonne 3, ligne 49 - colonne 4, ligne 6 * * figure 4 * ----- | 1-8 | |

Le présent rapport a été établi pour toutes les revendications

| Lieu de la recherche | Date d'achèvement de la recherche | Examinateur |
|---|---|---|
| Munich | 27 juillet 2004 | Le Bras, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

8

**ANNEXE AU RAPPORT DE RECHERCHE EUROPEENNE
RELATIF A LA DEMANDE DE BREVET EUROPEEN NO.**
                                                                                                    EP 04 29 0161

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-07-2004

| Document brevet cité au rapport de recherche | | Date de publication | Membre(s) de la famille de brevet(s) | | Date de publication |
|---|---|---|---|---|---|
| EP 0693839 | A | 24-01-1996 | JP | 8032623 A | 02-02-1996 |
| | | | DE | 69527006 D1 | 18-07-2002 |
| | | | DE | 69527006 T2 | 16-01-2003 |
| | | | EP | 0693839 A2 | 24-01-1996 |
| | | | KR | 155457 B1 | 16-11-1998 |
| | | | US | 5699519 A | 16-12-1997 |
| EP 1193921 | A | 03-04-2002 | CA | 2356461 A1 | 13-03-2002 |
| | | | EP | 1193921 A2 | 03-04-2002 |
| EP 0544454 | A | 02-06-1993 | GB | 2261799 A | 26-05-1993 |
| | | | EP | 0544454 A2 | 02-06-1993 |
| | | | US | 5428616 A | 27-06-1995 |

EPO FORM P0460

Pour tout renseignement concernant cette annexe : voir Journal Officiel de l'Office européen des brevets, No.12/82